# EUROPÄISCHE PATENTANMELDUNG

(11) **EP 4 556 771 A2**
(43) Veröffentlichungstag der Anmeldung: **21.05.2025**
(21) Anmeldenummer: 25166623.6
(22) Anmeldetag: 27.03.2025
(51) Int. Cl.: F16K 51/02, F16K 27/02, F16K 31/06, F16K 37/00

(54) **VAKUUMVENTILEINRICHTUNG UND SYSTEM UMFASSEND EINE VAKUUMPUMPE UND EINE VAKUUMVENTILEINRICHTUNG**

(30) Priorität: 25.04.2024 US 202418645475
(71) Anmelder: Pfeiffer Vacuum Technology AG, 35614 Asslar (DE)
(72) Erfinder: Wirth, Niklas, 35633 Lahnau (DE)
(74) Vertreter: Manitz Finsterwald Patent- und Rechtsanwaltspartnerschaft mbB

(57) **Zusammenfassung**

Die Erfindung betrifft eine Vakuumventileinrichtung mit einem Ventilgehäuse (22), das einen Gaseinlass und einen Gasauslass aufweist, die durch einen Durchgangskanal miteinander in Verbindung stehen, der durch einen bewegbar angeordneten und in einer Schließstellung mit einem Ventilsitz (34) zusammenwirkenden Ventilkörper selektiv gasdicht sperrbar ist, wobei zumindest ein in die Ventileinrichtung integrierter Gasdrucksensor (46) vorgesehen ist, mit dem ein in einem ihm zugeordneten Abschnitt des Durchgangskanals herrschender Gasdruck bestimmbar ist. Die Erfindung betrifft ferner ein System umfassend eine Vakuumpumpe und eine solche Vakuumventileinrichtung. Die Erfindung betrifft ferner ein System zumindest umfassend eine solche Vakuumventileinrichtung und eine Vakuumpumpe.

## Beschreibung

Die vorliegende Erfindung betrifft eine Vakuumventileinrichtung, die in einem Vakuumsystem verbaut werden kann.

In der Forschung oder bei vielen industriellen Prozessen, beispielsweise in der Beschichtungs- und/oder Halbleitertechnik, müssen bestimmte Bearbeitungs- oder Verfahrensschritte im Vakuum, insbesondere im Hochvakuum oder Ultrahochvakuum, durchgeführt werden. Zu diesem Zweck sind Vakuumsysteme vorgesehen, die in der Regel einen oder mehrere Rezipienten umfassen, die durch Vakuumpumpen evakuiert werden können, so dass in ihnen dann die entsprechenden Bearbeitungs- oder Verfahrensschritte durchgeführt werden können. Je nach Anwendung bzw. Anforderung an die Qualität des Vakuums, werden Vakuumpumpen bereitgestellt, die geeignete Leistungscharakteristika aufweisen. Vakuumsysteme umfassen zudem Ventileinrichtungen, mit denen die einzelnen Komponenten des Vakuumsystems voneinander und/oder von der Umgebung getrennt werden können.

Zur Steuerung solcher Vakuumsystems sind in der Regel Sensoren vorgesehen, mit denen an geeigneten Stellen im System der dort herrschende Druck gemessen werden kann. Die Daten dieser Sensoren können durch eine Steuereinheit verarbeitet werden und dienen als Grundlage für eine geeignete Steuerung der zumindest einen Vakuumpumpe und/oder der Ventileinrichtung(en).

Die Aufgabe der vorliegenden Erfindung ist es, eine Vakuumventileinrichtung zu schaffen, die auf kostengünstige Weise eine Überwachung und Steuerung eines Vakuumsystems ermöglicht.

Die Lösung dieser Aufgabe erfolgt mit einer Vakuumventileinrichtung mit den Merkmalen des Anspruchs 1.

Erfindungsgemäß umfasst die Vakuumventileinrichtung ein Ventilgehäuse, das einen Gaseinlass und einen Gasauslass aufweist. Der Gaseinlass und der Gasauslass stehen durch einen Durchgangskanal miteinander in Verbindung. Der Durchgangskanal ist durch einen beweglich angeordneten und in einer Schließstellung mit einem Ventilsitz zusammenwirkenden Ventilkörper selektiv gasdicht sperrbar. Ferner ist zumindest ein in die Ventileinrichtung integrierter Gasdrucksensor vorgesehen, mit dem ein in einem ihm zugeordneten Abschnitt des Durchgangskanals herrschender Gasdruck bestimmbar ist.

Der Gaseinlass und der Gasauslass sind mit weiteren Komponenten eines Vakuumsystems verbindbar, zum Beispiel direkt mit einem Rezipienten und/oder einem Gasauslass einer Vakuumpumpe und/oder mit Vakuumleitungen. Mit Hilfe des Gasdrucksensors kann der bei einer offenen Stellung des Ventils herrschender Druck in dem Durchgangskanal bestimmt werden. In einer Schließstellung der Ventileinrichtung, in der der Ventilkörper dichtend mit dem Ventilsitz zusammenwirkt, kann durch den Gasdrucksensor der Druck in dem Abschnitt des Durchgangskanals gemessen werden, der ihm zugeordnet ist.

Durch die Integration eines Gasdrucksensors in die Vakuumventileinrichtung wird eine kompakte Komponente geschaffen, die den Gasdruck an einem zentralen Bestandteil eines Vakuumsystems misst. Mit der Montage der Vakuumventileinrichtung werden also gleich zwei Funktionalitäten in das entsprechende Vakuumsystem integriert (Absperrmöglichkeit und Überwachungssensor), was die Montagekosten und -zeiten nicht unerheblich reduziert. Außerdem ist es nicht erforderlich, besondere Leitungsabschnitte mit entsprechenden Adaptern bereitzustellen, die es ermöglichen, Gasdrucksensoren in das Vakuumsystem zu integrieren. Eine Integration von Drucksensoren in die Vakuumpumpen ist mit erheblichen Kosten verbunden und gestaltet Wartungs- und/oder Reparaturarbeiten aufwendig.

Weitere Ausführungsformen der vorliegenden Erfindung sind in den Ansprüchen, der Beschreibung und den beigefügten Zeichnungen angegeben.

Gemäß einer Ausführungsform ist der Gasdrucksensor in einer in dem Ventilgehäuse ausgebildeten Druckmesskammer angeordnet, die mit dem Durchgangskanal in Fluidverbindung steht. Die Kammer kann bedarfsgerecht entsprechend dimensioniert werden, um einen den jeweiligen Anforderungen gerecht werdenden Drucksensor aufnehmen zu können.

Die Druckmesskammer kann über einen Druckmesskanal mit dem Durchgangskanal verbunden sein, wobei der Druckmesskanal einen kleineren Öffnungsquerschnitt aufweist als die Druckmesskammer. Diese Ausgestaltung trägt der Tatsache Rechnung, dass bereits ein kleiner Öffnungsquerschnitt ausreicht, um einen Druckausgleich zwischen der Druckmesskammer und dem Durchgangskanal zu ermöglichen. Grundsätzlich kann der Druckmesskanal aber auch einen gleich großen oder sogar größeren Öffnungsquerschnitt aufweisen.

Es kann ein Deckelelement vorgesehen sein, durch das die Druckmesskammer gasdicht gegenüber der Umgebung abgeschlossen ist. Das Deckelelement kann zumindest abschnittsweise in einer Vertiefung aufgenommen sein, die in einer Außenseite des Ventilgehäuses angeordnet ist und von der sich die Druckmesskammer in das Innere des Ventilgehäuses erstreckt. Durch die Vertiefung kann eine Dicke des Deckelements zumindest teilweise kompensiert werden, um eine möglichst kompakte Ausgestaltung der Vakuumventileinrichtung zu erhalten. Sie erleichtert auch die Montage.

Gemäß einer Ausführungsform ist der Gasdrucksensor auf einer Platine angeordnet, die das Deckelelement bildet. Auf einer dem Gassensor abgewandten Seite der Platine kann eine Anschlusseinrichtung zur elektronischen Anbindung des Gasdrucksensors vorgesehen sein. Letztlich kann die Platine als Vakuumdurchführung fungieren, die einerseits die Druckmesskammer gasdicht abschließt und die andererseits eine Ausgabe der von dem Gasdrucksensor gemessenen Daten zu ermöglichen.

Gemäß einer weiteren Ausführungsform ist der Ventilkörper linear verfahrbar angeordnet. Die Verfahrrichtung des Ventilkörpers kann senkrecht zu einer jeweiligen Längserstreckung der Druckmesskammer und/oder zumindest eines Abschnitts des Durchgangskanals angeordnet sein.

Eine kostengünstig herstellbare Ausführungsform der Vakuumventileinrichtung sieht vor, dass die Druckmesskammer und/oder der Druckmesskanal Bohrungen sind. Der Durchgangskanal kann - alternativ oder zusätzlich - ebenfalls zumindest abschnittsweise durch zumindest eine Bohrung gebildet sein.

Die Vakuumventileinrichtung kann eine Aktuatoreinrichtung umfassen, mit der der Ventilkörper zur Freigabe und/oder Sperrung des Durchgangskanals bewegbar ist. Bei einer besonders kompakten Bauform kann ein Kabel zugleich zur Steuerung der Aktuatoreinrichtung und zur Anbindung des Gasdrucksensors genutzt werden.

Gemäß einer weiteren Ausführungsform weist die Vakuumventileinrichtung zusätzlich zu dem Gasdrucksensor zumindest einen zweiten Gasdrucksensor auf, der in die Ventileinrichtung integriert ist. Der eingangs beschriebene Gasdrucksensor kann derart angeordnet sein, dass ein in dem Durchgangskanal zwischen dem Gaseinlass und dem Ventilsitz herrschender erster Gasdruck bestimmbar ist. Der zweite Gasdrucksensor ist dann derart angeordnet, dass ein in dem Durchgangskanal zwischen dem Gasauslass und dem Ventilsitz herrschender zweiter Gasdruck bestimmbar ist. So kann auch bei einer geschlossenen oder gesperrten Ventileinrichtung der Druck sowohl in dem einlassseitigen als auch in dem auslassseitigen Abschnitt des Durchgangskanals gemessen werden. Außerdem kann mit dieser Ausführungsform auch ein Durchfluss der Vakuumventileinrichtung überwacht werden.

Die vorstehenden Ausführungen betreffend den Gasdrucksensor sowie den ihm zugeordneten Komponenten "Druckmesskammer", "Druckmesskanal" und "Deckelelement" gelten in analoger Form für den zweiten Gasdrucksensor. Er kann in einer zweiten Druckmesskammer angeordnet sein, die über einen zweiten Druckmesskanal mit dem Durchgangskanal verbunden ist. Der zweite Druckmesskanal kann einen kleineren Öffnungsquerschnitt aufweisen als die zweite Druckmesskammer. Auch die zweite Druckmesskammer kann durch ein Deckelelement gegenüber der Umgebung abgeschlossen sein. Dieses Deckelelement kann separat von dem Deckelelement für die erste Druckmesskammer ausgebildet sein. Bevorzugt ist jedoch ein gemeinsames Deckelelement vorgesehen, das die erste und die zweite Druckmesskammer abschließt. Insbesondere ist dieses Deckelelement eine Platine, die den ersten Gasdrucksensor und den zweiten Gasdrucksensor aufnimmt. Zwar ist es grundsätzlich vorstellbar, dass für jeden Gasdrucksensor eine eigene Anschlusseinrichtung vorgesehen ist. Besonders kostengünstig und kompakt ist es jedoch, wenn den beiden Gasdrucksensoren eine gemeinsame Anschlusseinrichtung zugeordnet ist.

Die Erfindung betrifft ferner ein System umfassend zumindest eine Vakuumpumpe und zumindest eine separate, lösbar an der Vakuumpumpe befestigte oder mit dieser in Verbindung stehende Vakuumventileinrichtung gemäß zumindest einer der vorstehend beschriebenen Ausführungsformen. Bei einer direkten Anbindung der Ventileinrichtung an die Vakuumpumpe ergibt sich eine besonders kompakte Bauform. In vielen Anwendungsfällen kann es jedoch auch vorteilhaft sein, die Ventileinrichtung beabstandet von der Pumpe anzuordnen und eine Fluidverbindung zwischen den beiden Komponenten herzustellen.

Insbesondere wenn die Vakuumpumpe eine Hochvakuumpumpe ist (beispielsweise eine Turbomolekularpumpe), kann es sein, dass diese kein Gas gegen den Umgebungsdruck ausstoßen kann. Dann ist in der Regel eine Vorvakuumpumpe vorgesehen, die dafür Sorge trägt, dass an dem Auslass der Hochvakuumpumpe ein bereits reduzierter Druck herrscht, gegen den sie arbeiten kann.

Mit der erfindungsgemäßen Ventileinrichtung werden nun zwei Funktionalitäten bereitgestellt: Neben einer reinen Sperrwirkung kann sie zur Überwachung des Systems genutzt werden, nämlich indem der eingangsseitige Druck, also der Vorvakuumdruck bestimmt wird. Weist dieser Abweichungen von dem zu erwartenden Druck auf (z.B. ist er zu hoch), dann kann die Ventileinrichtung geschlossen werden, um die Hochvakuumpumpe zu schützen. Besonders vorteilhaft ist in diesem Zusammenhang eine Ausführungsform der Vakuumventileinrichtung mit zwei Gasdrucksensoren, da beispielsweise in einem geschlossenen Zustand der Ventileinrichtung überprüft werden kann, ob auf beiden Seiten eines in Schließstellung befindlichen Ventilkörpers ermittelt werden kann, ob die Druckdifferenz so gering ist, dass ein gefahrloses Öffnen der Ventileinrichtung möglich ist.

Bevorzugt sind der Gasdrucksensor und/oder - falls vorhanden - die Aktuatoreinrichtung der Vakuumventileinrichtung mit einer Steuereinrichtung zur Steuerung des Systems verbunden. Die Steuereinrichtung kann eine Steuereinheit der Vakuumpumpe sein oder in diese integriert sein. Alternativ ist es denkbar, dass die Steuereinrichtung eine übergeordnete Steuereinheit ist oder in eine solche integriert ist, die zur Steuerung eines Vakuumsystems vorgesehen ist. Solche Vakuumsysteme können sehr komplex sein und mehrere Rezipienten, Pumpen und eine Vielzahl von Ventilleitungen umfassen, die vorteilhafterweise zentral gesteuert werden können.

Nachfolgend wird die vorliegende Erfindung rein beispielhaft unter Bezugnahme auf vorteilhafte Ausführungsformen erläutert. Diese zeigen:
- Fig. 1a und 1b: jeweils ein Beispiel für ein erfindungsgemäßes Vakuumsystem,
- Fig. 2: ein Schnitt durch eine Vakuumventileinrichtung,
- Fig. 3a und 3b: perspektivische Ansichten einer Ausführungsform der Vakuumventileinrichtung und
- Fig. 4a bis 4c: Schnitt- bzw. Seitenansichten der Ausführungsform gemäß Fig. 3a und 3b.

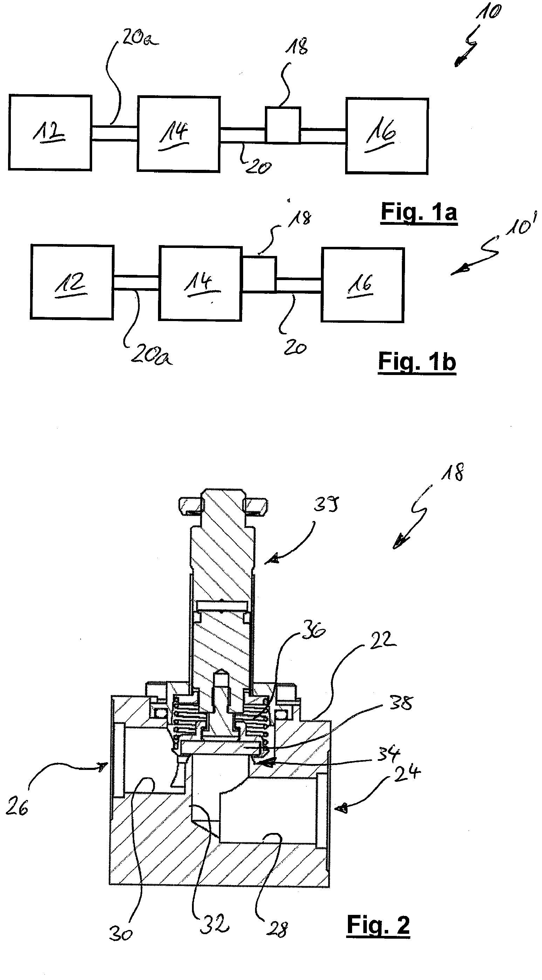

Fig. 1 zeigt ein Vakuumsystem 10 umfassend einen Rezipienten 12, eine Hochvakuumpumpe 14, beispielsweise eine Turbomolekularpumpe, sowie eine Vorvakuumpumpe 16 beliebiger Bauart. Zwischen den Pumpen 14, 16 ist eine Ventileinrichtung 18 (im Folgenden auch kurz Ventil genannt) vorgesehen, um bei Bedarf die Pumpen 14, 16 voneinander trennen zu können. Das Ventil 18 ist in einer Rohrleitung 20 angeordnet, die die Pumpen 14, 16 verbindet. Die Hochvakuumpumpe 14 steht mit dem Rezipienten 12 über eine Rohrleitung 20a in Verbindung.

In Fig. 1a ist das Ventil 18 eine Komponente, die separat von den Pumpen 14, 16 angeordnet ist. Sie ist mit einer nicht gezeigten Steuereinrichtung verbunden, die wiederum mit weiteren, nicht gezeigten Komponenten verbunden sein kann, beispielsweise verschiedenartigsten Sensoren und/oder weiteren Ventilen, Pumpen oder Rezipienten.

Fig. 1b zeigt ein Vakuumsystem 10'. Allerdings ist das Ventil 18 bei diesem Ausführungsbeispiel direkt im Bereich eines Auslasses der Hochvakuumpumpe angeordnet und an dieser lösbar befestigt, wodurch eine besonders kompakte Bauweise erzielt wird.

Es versteht sich, dass die vorstehend beschriebenen Vakuumsysteme 10, 10' lediglich beispielhaft für Systeme mit zumindest einer Vakuumpumpe und einem erfindungsgemäßen Ventil stehen.

Fig. 2 zeigt das Ventil 18 in einem Querschnitt. Es umfasst ein Ventilgehäuse 22 mit einem Einlass 24 und einem Auslass 26. Von dem Einlass 24 und dem Auslass 26 erstreckt sich jeweils eine Bohrung 28 bzw. 30 in das Innere des Ventilgehäuses 22. Die Bohrungen 28, 30 verlaufen parallel versetzt zueinander.

Die Bohrung 28 steht mit einer rechtwinklig dazu angeordneten Bohrung 32 in Verbindung, deren der Bohrung 28 abgewandtes Ende einen Ventilsitz 34 bildet.

In dem gezeigten geschlossenen Zustand des Ventils 18 wird ein Ventilkörper 38 durch die Wirkung einer Feder 36 gegen den Ventilsitz gepresst, wodurch eine Fluidverbindung zwischen dem Einlass 24 und dem Auslass 26 gesperrt ist. Um das Ventil 18 zu öffnen, wird eine nicht im Detail gezeigte aber hinlänglich bekannte Aktuatoreinrichtung 39 betätigt, durch die der Ventilkörper 38 gegen die Wirkung der Feder 36 nach oben gezogen wird. Die Aktuatoreinrichtung 39 kann beispielsweise pneumatisch, elektrisch oder elektromagnetisch (z.B. durch eine selektiv bestrombare Spule) betätigbar sein.

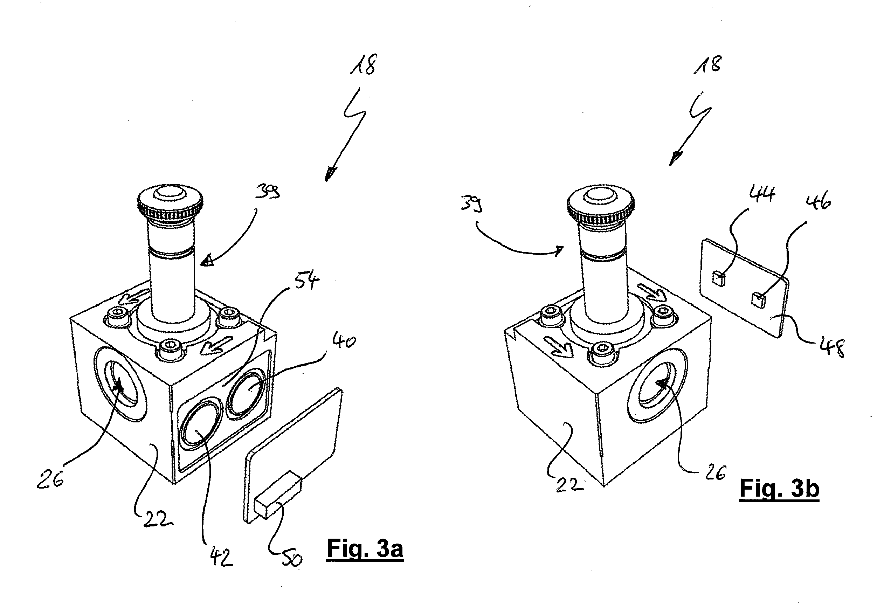

Die Fig. 3a und 3b zeigen perspektivische Ansichten des Ventils 18, das zwei Druckmesskammern 40, 42 aufweist, die mit den Bohrungen 28 bzw. 30 in Verbindung stehen. In den Druckmesskammern 40, 42 sind Gasdrucksensoren 44, 46 angeordnet, die auf einem gemeinsamen Deckelelement 48 angeordnet sind, mit dem die Druckmesskammern gegenüber der Umgebung und gegeneinander gasdicht verschlossen werden.

Im vorliegenden Ausführungsbeispiel ist das Deckelelement 48 als gasdichte Platine ausgebildet, die an ihrer Außenseite ein Anschlusselement 50 trägt, welches mit den Sensoren 44, 46 in Verbindung steht. Das Anschlusselement 50 kann eine Steckereinrichtung umfassen, an der ein Kabel befestigt werden kann, so dass die Daten der Sensoren 44, 46 einer Steuereinrichtung zugeführt werden können. Diese nicht gezeigte Steuereinrichtung kann auch zur Betätigung der Aktuatoreinrichtung 39 und/oder der Steuerung weiterer Komponenten des Vakuumsystems vorgesehen sein.

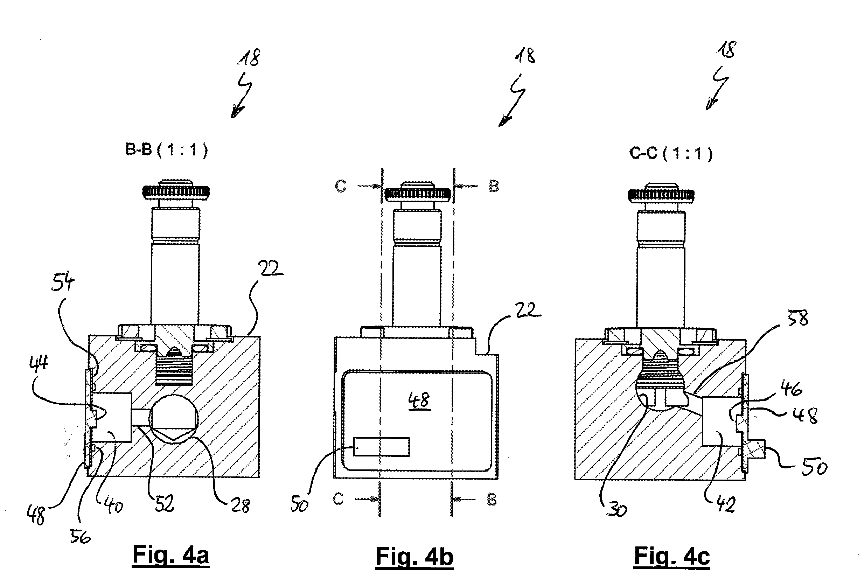

In den Fig. 4a und 4c sind Schnitte durch das Ventil 18 gezeigt (nämlich Schnitte B-B bzw. C-C), deren jeweilige Lage in einer Seitenansicht des Ventils 18 markiert ist (vgl. Fig. 4b).

In Fig. 4a zeigt einen Schnitt durch die Druckmesskammer 40. Sie ist über einen Druckmesskanal 52 mit der Bohrung 28 verbunden. Auch der Druckmesskanal 52 ist eine Bohrung, deren Durchmesser jedoch deutlich kleiner ist als der der Kammer 40. Der Sensor 44 kann daher den in der Bohrung 28 herrschenden Druck messen. Wie bereits erläutert wurde, ist der Sensor 44 auf einer Platine 48 angeordnet, die die Druckmesskammer 40 gegen den Außenraum abdichtet. Die Platine 48 wird zum Teil von einer Vertiefung 54 aufgenommen, die auch in Fig. 3a gut zu sehen ist. Zwischen der Platine 48 und der Vertiefung ist eine Dichtung 56 vorgesehen.

Fig. 4c zeigt einen Schnitt durch die Druckmesskammer 42, in der die an der gemeinsamen Platine 48 angeordnete Sensor 46 ragt. Die Druckmesskammer 42 ist über einen Druckmesskanal 58 mit der Bohrung 30 verbunden. Da die Bohrung 30 parallel versetzt zu der Bohrung 28 angeordnet ist, verläuft der Druckmesskanal 58 schräg. Auch er ist im vorliegenden Ausführungsbeispiel eine Bohrung.

Wie den Fig. 3a, 3b, 4a und 4c zu entnehmen ist, sind die Kammern 40, 42 parallel und auf gleicher Höhe in dem Ventilgehäuse 22 angeordnet. Sie erstrecken sich senkrecht sowohl zu den Bohrungen 28, 30 als auch zu der Bohrung 32.

Das vorstehend beschriebene Ausführungsbeispiel des Ventils 18 kann auf einfache Weise durch eine Anzahl von Bohrungen aus einem monolithischen Werkstück gefertigt werden. So wird eine gleichzeitig robuste und auch kompakte Bauweise erzielt. Es versteht sich aber, dass das Ventilgehäuse 22 auch mehrstückig ausgebildet sein kann.

### Bezugszeichenliste

- 10, 10': Vakuumsystem
- 12: Rezipient
- 14: Hochvakuumpumpe
- 16: Vorvakuumpumpe
- 18: Ventil
- 20, 20a: Rohrleitung
- 22: Ventilgehäuse
- 24: Einlass
- 26: Auslass
- 28, 30, 32: Bohrung
- 34: Ventilsitz
- 36: Feder
- 38: Ventilkörper
- 39: Aktuatoreinrichtung
- 40, 42: Druckmesskammer
- 44, 46: Gasdrucksensor
- 48: Deckelelement / Platine
- 50: Anschlusselement
- 52, 58: Druckmesskanal
- 54: Vertiefung
- 56: Dichtung

## Patentansprüche

1. Vakuumventileinrichtung mit einem Ventilgehäuse (22), das einen Gaseinlass (24) und einen Gasauslass (26) aufweist, die durch einen Durchgangskanal miteinander in Verbindung stehen, der durch einen bewegbar angeordneten und in einer Schließstellung mit einem Ventilsitz (34) zusammenwirkenden Ventilkörper (38) selektiv gasdicht sperrbar ist,
wobei zumindest ein in die Ventileinrichtung integrierter Gasdrucksensor (44, 46) vorgesehen ist, mit dem ein in einem ihm zugeordneten Abschnitt (28, 30) des Durchgangskanals herrschender Gasdruck bestimmbar ist.

2. Vakuumventileinrichtung nach Anspruch 1,
wobei der Gasdrucksensor (44, 46) in einer in dem Ventilgehäuse (22) ausgebildeten Druckmesskammer (40, 42) angeordnet ist, die mit dem Durchgangskanal in Fluidverbindung steht.

3. Vakuumventileinrichtung nach Anspruch 2,
wobei die Druckmesskammer (40, 42) über einen Druckmesskanal (52, 58) mit dem Durchgangskanal verbunden ist, wobei der Druckmesskanal (52, 58) einen kleineren Öffnungsquerschnitt aufweist als die Druckmesskammer (40, 42).

4. Vakuumventileinrichtung nach Anspruch 2 oder 3,
wobei ein Deckelelement (48) vorgesehen ist, durch das die Druckmesskammer (40, 42) gasdicht gegenüber der Umgebung abgeschlossen ist.

5. Vakuumventileinrichtung nach Anspruch 4,
wobei eine Außenseite des Ventilgehäuses (22) eine Vertiefung (54) aufweist, von der sich die Druckmesskammer (40, 42) in das Innere des Ventilgehäuses (22) erstreckt und die das Deckelelement (48) zumindest abschnittsweise aufnimmt.

6. Vakuumventileinrichtung nach Anspruch 4 oder 5,
wobei der Gasdrucksensor (44, 46) auf einer Platine angerordnet ist, die das Deckelelement (48) bildet.

7. Vakuumventileinrichtung nach Anspruch 6,
wobei eine Anschlusseinrichtung (50) zur elektronischen Anbindung des Gasdrucksensors (44, 46) vorgesehen ist, die auf einer dem Gassensor abgewandten Seite der Platine (48) angeordnet ist.

8. Vakuumventileinrichtung nach einem der vorstehenden Ansprüche, wobei der Ventilkörper (38) linear verfahrbar angeordnet ist, insbesondere wobei eine Verfahrrichtung des Ventilkörpers (38) senkrecht zu einer jeweiligen Längserstreckung der Druckmesskammer (40, 42) und/oder zumindest eines Abschnitts (28, 30) des Durchgangskanals angeordnet ist.

9. Vakuumventileinrichtung nach einem der vorstehenden Ansprüche, wobei die Druckmesskammer (40, 42) und/oder der Druckmesskanal (52, 58) Bohrungen sind und/oder wobei der Durchgangskanal zumindest abschnittsweise durch zumindest eine Bohrung (28, 30, 32) gebildet ist.

10. Vakuumventileinrichtung nach einem der vorstehenden Ansprüche, wobei eine Aktuatoreinrichtung (39) vorgesehen ist, mit der der Ventilkörper (38) zur Freigabe und/oder Sperrung des Durchgangskanals bewegbar ist.

11. Vakuumventileinrichtung nach einem der vorstehenden Ansprüche, wobei zusätzlich zu dem Gasdrucksensor (44) zumindest ein in die Ventileinrichtung integrierter zweiter Gasdrucksensor (46) vorgesehen ist, wobei der Gasdrucksensor (44) derart angeordnet ist, dass ein in dem Durchgangskanal zwischen dem Gaseinlass (24) und dem Ventilsitz (34) herrschender erster Gasdruck bestimmbar ist und wobei der zweite Gasdrucksensor (46) derart angeordnet ist, dass ein in dem Durchgangskanal zwischen dem Gasauslass (26) und dem Ventilsitz (34) herrschender zweiter Gasdruck bestimmbar ist.

12. System umfassend zumindest eine Vakuumpumpe (14, 16), insbesondere Hochvakuumpumpe, und zumindest eine separate, lösbar an der Vakuumpumpe (14, 16) befestigte oder mit dieser in Verbindung stehende Vakuumventileinrichtung gemäß zumindest einem der vorstehenden Ansprüche, wobei der Gaseinlass (24) der Vakuumventileinrichtung mit einem Gasauslass (26) der Vakuumpumpe (14, 16) in Verbindung steht.

13. System nach Anspruch 12,
wobei der Gasdrucksensor (44, 46) und/oder - falls vorhanden - die Aktuatoreinrichtung (39) der Vakuumventileinrichtung mit einer Steuereinrichtung zur Steuerung des Systems verbunden sind.

14. System nach Anspruch 13,
wobei die Steuereinrichtung eine Steuereinheit der Vakuumpumpe (14, 16) ist oder in diese integriert ist oder wobei die Steuereinrichtung eine Steuereinheit ist oder in diese integriert ist, die zur Steuerung eines Vakuumsystems mit weiteren Komponenten vorgesehen ist.
